# EUROPEAN PATENT APPLICATION

(11) **EP 3 291 345 A1**
(43) Date of publication of application: **07.03.2018**
(21) Application number: 15890722.0
(22) Date of filing: 28.04.2015
(51) Int. Cl.: H01M 8/04, H01M 8/12

(54) **FUEL CELL SYSTEM**

(71) Applicant: Nissan Motor Co., Ltd., Yokohama-shi, Kanagawa 221-0023 (JP)
(72) Inventor: UOZUMI, Tetsuo, Atsugi-shi Kanagawa 243-0123 (JP)
(74) Representative: Grünecker Patent- und Rechtsanwälte PartG mbB
(86) International application number: PCT/JP2015/062819
(87) International publication number: WO 2016/174738

(57) **Abstract**

A fuel cell (1) generates electricity while air sent from a compressor (43) and fuel sent from a fuel container (3) by a fuel pump (9) are supplied thereto. The fuel is reformed by a reformer (17) and then supplied to the fuel cell (1). Temperature of the air is increased by an oxidizing agent heater (49). To the oxidizing agent heater (49), liquid fuel (5) in the fuel container (3) is supplied through a liquid fuel pipe (35) and fuel vapor vaporizing from the liquid fuel (5) in the fuel container (3) is supplied through a fuel vapor pipe (53).

## Description

### TECHNICAL FIELD

The present invention relates to a fuel cell system that supplies fuel and oxidizing agent to a fuel cell to generate electricity.

### BACKGROUND ART

Known is a technology in which fuel vapor that arises in a fuel tank is used as fuel for a fuel cell by absorbing the fuel vapor bay a canister and then desorbing it to flow it into a fuel vapor reformer (Patent Literature 1).

### CITATION LIST

### Prior-art Literature

Patent Literature 1: Japanese Unexamined Patent Application Publication No. 2000-192863

### SUMMARY OF INVENTION

### Problem to be solved by Invention

However, the fuel vaporizing in a fuel tank (fuel vapor) may be released to the outside through a refuel port when refilling the tank with no countermeasure, and thereby the fuel vapor containing energy may be wasted.

Therefore, the present invention intends to effectively utilize fuel vapor that arises in a fuel container that contains fuel in a liquid state.

### Means for solving Problem

The present invention includes a fuel vapor pipe that flows fuel vapor, which arises when liquid fuel in a fuel container vapors, into an oxidizing agent heater. Advantageous Effect of Invention

According to the present invention, the fuel vapor that arises in a fuel container can be utilized effectively for heating the oxidizing agent by being supplied to the oxidizing agent heater through the fuel vapor pipe and then being combusted by the oxidizing agent heater.

### BRIEF DESCRIPTION OF DRAWINGS

[Fig. 1] Fig. 1 is a configurational overall view of a fuel cell system according to a first embodiment of the present invention.
[Fig. 2] Fig. 2 is a simplified cross-sectional view of a vaporizer, a heat exchanger and a catalytic combustor used in Fig. 1.
[Fig. 3] Fig. 3 is a simplified cross-sectional view of a start-up combustor used in Fig. 1.
[Fig. 4] Fig. 4 is a configurational overall view of a fuel cell system according to a second embodiment of the present invention.
[Fig. 5] Fig. 5 is a configurational overall view of a fuel cell system according to a third embodiment of the present invention.
[Fig. 6] Fig. 6 is a configurational overall view of a fuel cell system according to a fourth embodiment of the present invention.
[Fig. 7] Fig. 7 is a configurational overall view of a fuel cell system according to a fifth embodiment of the present invention.
[Fig. 8] Fig. 8 is a configurational overall view of a fuel cell system according to a seventh embodiment of the present invention.
[Fig. 9] Fig. 9 is a simplified cross-sectional view of a heat exchanger and a catalytic combustor used in Fig. 8.

### DESCRIPTION OF EMBODIMENTS

Hereinafter, embodiments for carrying out the present invention will be described in detail with reference to the drawings.

### [First Embodiment]

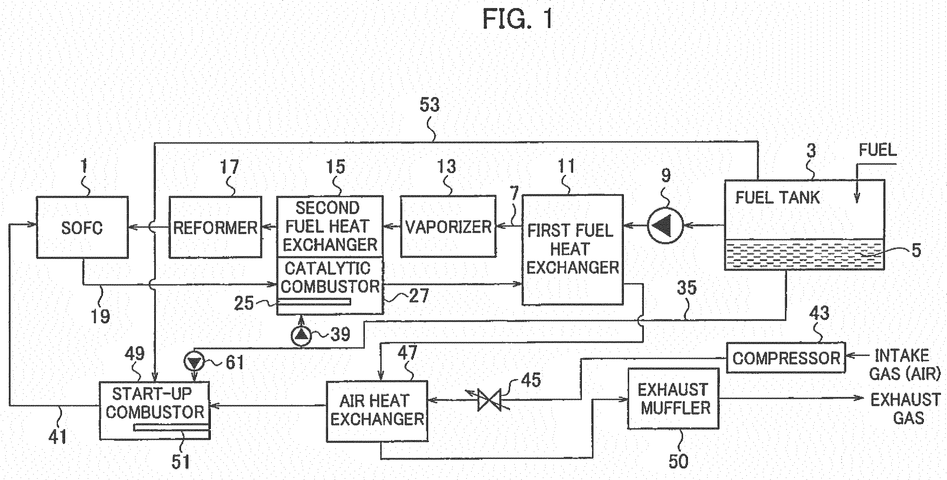

Fig. 1 is a configurational overall view of a fuel cell system according to a first embodiment of the present invention. A solid oxide fuel cell (SOFC, hereinafter, it is merely called as the fuel cell) 1 generates electricity while receiving supplies of hydrogen that is fuel and air that is oxidizing agent.

The fuel is contained, as liquid fuel 5, in a fuel tank 3 as a fuel container in a liquid state. Alcohol such as methanol and ethanol, gasoline, light oil or the like is used as the liquid fuel 5.

A fuel pump 9, a first fuel heat exchanger 11, a vaporizer 13, a second fuel heat exchanger 15 and a reformer 17 are disposed on a fuel pipe 7 that connects the fuel cell 1 with the fuel tank 3, in this order from the fuel tank 3 located at an upstream.

The fuel pump 9 sends the liquid fuel 5 in the fuel tank 3 into the first fuel heat exchanger 11. The first fuel heat exchanger 11 heats the liquid fuel fed by the fuel pump 9 by heats of exhaust gas exhausted from the fuel cell 1 to increase its temperature. The exhaust gas flows from the fuel cell 1 into the first fuel heat exchanger 11 through an exhaust pipe 19.

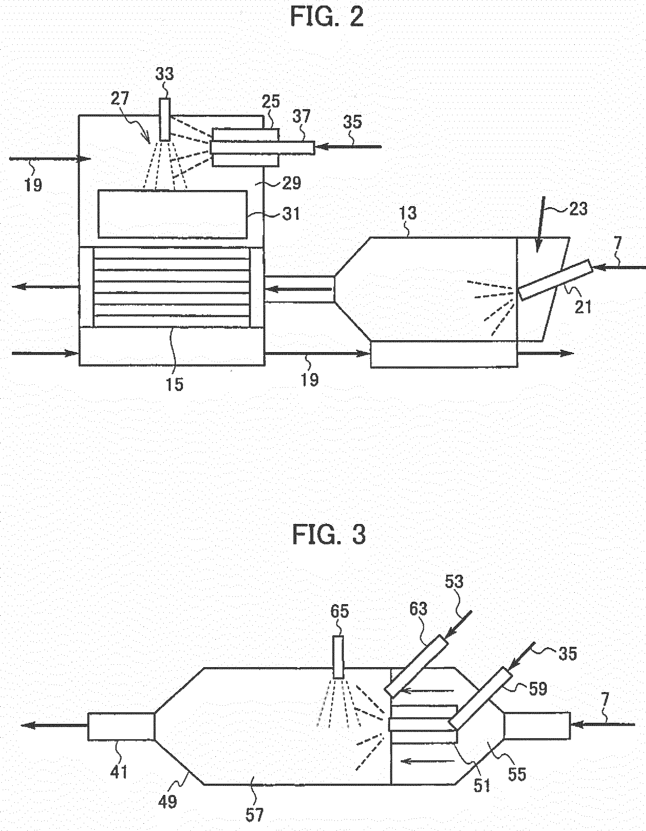

The vaporizer 13 vaporizes the liquid fuel flowing from the first fuel heat exchanger 11 and into it. As shown in Fig. 2, the vaporizer 13 injects the liquid fuel into the vaporizer 13 by its nozzle 21, and then atomized the liquid fuel injected by the nozzle 21 by flowing air from an air induction pipe 23. Further, although being omitted in Fig. 1, the vaporizer 13 heats the atomized fuel by the exhaust gas flowing through the exhaust pipe 19.

The second fuel heat exchanger 15 heats the vaporized fuel flowing from the vaporizer 13 by a fuel combustor 27 as a fuel heater that includes an electric heater 25 to increases its temperature. The above-mentioned exhaust pipe 19 is connected to the fuel combustor 27, and the exhaust gas flowing through the exhaust pipe 19 is introduced therein and then combusted catalytically and then its temperature is increased. The exhaust gas whose temperature is increased gives its heats to the fuel at the vaporizer 13 and the first fuel heat exchanger 11.

Configuration of the catalytic combustor 27 is simply shown in Fig. 2 together with the second fuel heat exchanger 15. The catalytic combustor 27 is accommodated in a catalytic combustion chamber 29 together with the second fuel heat exchanger 15. Note that Fig. 2 shows a positional relation of the second fuel heat exchanger 15 and the catalytic combustor 27 in a vertically reversed manner with respect to Fig. 1. The catalytic combustor 27 includes the above-mentioned electric heater 25, a catalyst 31 and a spark plug 33.

The electric heater 25 heats the liquid fuel supplied to a nozzle 37 through a liquid fuel pipe 35. The liquid fuel pipe 35 is connected to the fuel tank 3 as shown in Fig. 1, and includes a first liquid fuel pump 39 on a side near the fuel combustor 27. The liquid fuel is supplied to the nozzle 37 by the first liquid fuel pump 39. The spark plug 33 ignites the liquid fuel injected from the nozzle 37. The catalyst 31 combusts catalytically the ignited liquid fuel together with the exhaust gas inflowing from the exhaust pipe 19, and thereby heats are exchanged with the fuel at the second fuel heat exchanger 15.

The electric heater 25 operates at a start-up of the fuel cell system, and heats the fuel to be supplied to the fuel cell 1 by the catalytic combustor 27 even in a stage where no high-temperature exhaust gas exists. Therefore, the first liquid fuel pump 39 that supplies the liquid fuel to the catalytic combustor 27 also operates at the start-up of the fuel cell system.

The reformer 17 reforms the fuel that inflows from the second fuel heat exchanger 15 and whose temperature is increased to generate hydrogen. The generated hydrogen is supplied to anode of the fuel cell 1.

A compressor 43, an air flow-rate regulating valve 45, an air heat exchanger 47 and a start-up combustor 49 as an oxidizing agent heater are disposed, in this order from an upstream, on an air pipe 41 through which air to be supplied to the fuel cell 1 flows.

Air compressed by the compressor 43 is sent to the air heat exchanger 47 after its flow-rate is regulated by the air flow-rate regulating valve 45. The air heat exchanger 47 is connected with the above-mentioned exhaust pipe 19 extended from the first fuel heat exchanger 11, and heats the air by the exhaust gas flowing through the exhaust pipe 19 to increase its temperature. The exhaust gas exhausted from the air heat exchanger 47 is discharged to the outside via an exhaust muffler 50. Namely, the catalytic combustor 27, the vaporizer 13, the first fuel heat exchanger 11, the air heat exchanger 47 and the exhaust muffler 50 are disposed on the exhaust pipe 19 in this order from the fuel cell 1.

The start-up combustor 49 includes an electric heater 51, and heats the air inflowing from the air heat exchanger 47 to increase its temperature. The start-up combustor 49 and the fuel tank 3 are connected with each other by a fuel vapor pipe 53. The fuel vapor generated when the liquid fuel 5 in the fuel tank 3 vapors is supplied to the start-up combustor 49 through the fuel vapor pipe 53. Namely, the fuel vapor pipe 53 flows the fuel vapor generated when the liquid fuel 5 in the fuel tank 3 vapors to the start-up combustor 49.

Configuration of the start-up combustor 49 is simply shown in Fig. 3. The start-up combustor 49 includes an air induction chamber 55 and a combustion chamber 57, and the above-mentioned electric heater 51 is accommodated in the air induction chamber 55. The liquid fuel in the fuel tank 3 is supplied to a liquid fuel nozzle 59 via the above-mentioned liquid fuel pipe 35.

The liquid fuel is supplied to the liquid fuel nozzle 59 by a second liquid fuel pump 61 shown in Fig. 1. The second liquid fuel pump 61 is disposed on the liquid fuel pipe 35 at its end on a downstream side from the above-mentioned first liquid fuel pump 39. The liquid fuel heated by the electric heater 51 is injected into the combustion chamber 57.

The electric heater 51 operates at the start-up of the fuel cell system, and heats air to be supplied to the fuel cell 1 by the start-up combustor 49 even in a stage where no high-temperature exhaust gas exists. Therefore, the second liquid fuel pump 61 that supplies the liquid fuel to the start-up combustor 49 also operates at the start-up of the fuel cell system.

Further, the fuel vapor is injected from a fuel vapor nozzle 63 to a portion, in the combustion chamber 57, to which the liquid fuel is injected, and to a vicinity of the portion. The fuel vapor nozzle 63 is connected to the above-mentioned fuel vapor pipe 53.

A spark plug 65 is disposed near the portion, in the combustion chamber 57, to which the liquid fuel is injected. The spark plug 65 ignites the liquid fuel injected from the liquid fuel nozzle 59 and the fuel vapor injected from the fuel vapor nozzle 63 to combust them.

The air introduced from the air heat exchanger 47 into the air induction chamber 55 of the start-up combustor 49 is heated while passing through a pipe, not shown in the drawings, in the combustion chamber 57, and then its temperature is increased. The air whose temperature is increased is supplied to cathode of the fuel cell 1, and then provided to electricity generation of the fuel cell 1 together with the fuel separately supplied to the anode via the fuel pipe 7.

In the present embodiment, both the catalytic combustor 27 on a fuel side and the start-up combustor 49 on an air side operate at the start-up of the fuel cell system. Therefore, the fuel and the air are heated from the start-up of the fuel cell system, and then their temperatures are increased. Since the solid oxide fuel cell 1, whose temperature during its steady operation is 650°C to 800°C, requires increases in temperatures of the fuel and the air that are supplied, the operations of the catalytic combustor 27 and the start-up combustor 49 at the start-up of the fuel sell system can bring its stable operation.

In the present embodiment, the fuel vapor generated when the liquid fuel 5 vapors in the fuel tank 3 flows toward the start-up combustor 49 and then is supplied to the start-up combustor 49. Therefore, during the combustion at the start-up combustor 49, not only the liquid fuel in the fuel tank 3 but also the fuel vapor generated when the liquid fuel 5 vapors in the fuel tank 3 are used as the fuel.

Thus, the fuel vapor that arises in the fuel tank 3 is prevented from being released to the outside, and thereby the fuel vapor can be utilized effectively. The effective utilization of the fuel vapor brings less consumption of the liquid fuel 5. In addition, by utilizing the fuel vapor as the fuel for the combustion at the start-up combustor 49, electric power required for vaporizing the liquid fuel can be made less than that in a case where only the liquid fuel is used for the combustion. In addition, the temperature of the start-up combustor 49 can be increased in a short time, and thereby the start-up time of the fuel cell system can be shortened.

### [Second Embodiment]

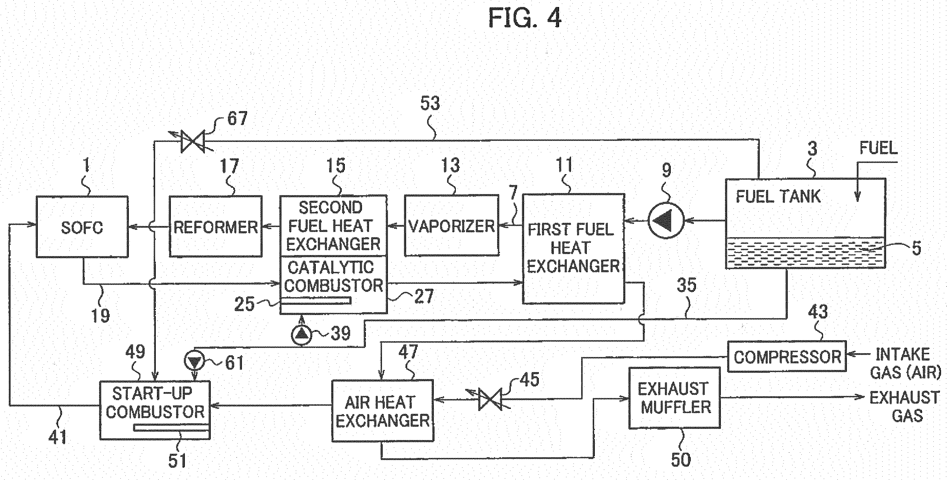

Fig. 4 is a configurational overall view of a fuel cell system according to a second embodiment of the present invention. In comparison with the first embodiment, a flow-rate regulating valve 67 as a flow-rate regulator is provided on the fuel vapor pipe 53 in the second embodiment. Flow-rate of the fuel vapor flowing through the fuel vapor pipe 53 is regulated by the flow-rate regulating valve 67. Other configurations are equivalent to those in the first embodiment, and equivalent components to those in the first embodiment are labeled with identical reference signs.

The flow-rate regulating valve 67 is opened at the start-up of the fuel cell system, and then regulates a supplied amount of the fuel vapor to the start-up combustor 49 by changing its opening by a control device that is not shown in the drawings. After a preset time period required for enabling stable operations of the fuel cell 1 elapses from the start-up, the flow-rate regulating valve 67 is closed.

According to the second embodiment, a ratio between the fuel vapor and the liquid fuel to be used for the combustion can be changed by regulating the supplied amount of the fuel vapor to the start-up combustor 49 by use of the flow-rate regulating valve 67. Therefore, the fuel vapor optimal for increasing the temperature of the start-up combustor 49 can be supplied, and thereby the fuel cell system can get high versatility.

### [Third Embodiment]

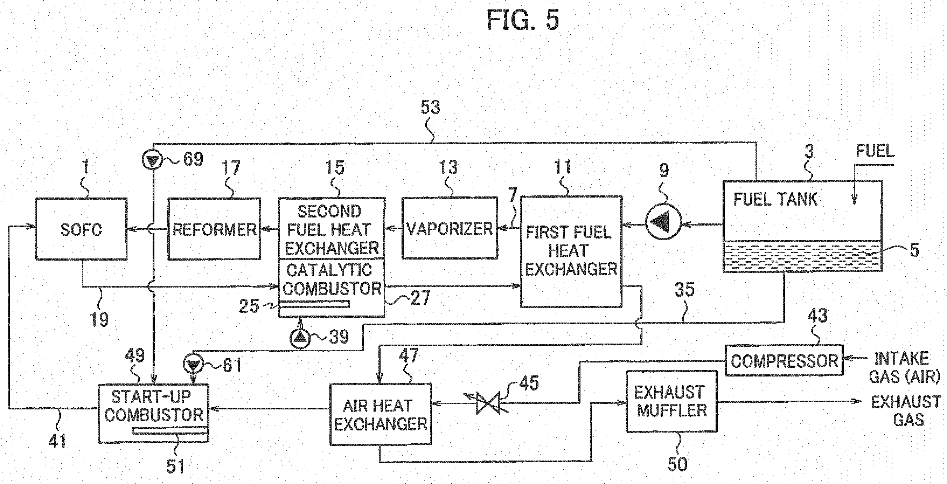

Fig. 5 is a configurational overall view of a fuel cell system according to a third embodiment of the present invention. In comparison with the first embodiment, a fuel vapor pump 69 as a fuel vapor feeder is provided on the fuel vapor pipe 53 in the third embodiment. The fuel vapor flowing through the fuel vapor pipe 53 is fed to the start-up combustor 49 to be sent into it by the fuel vapor pump 69. Other configurations are equivalent to those in the first embodiment, and equivalent components to those in the first embodiment are labeled with identical reference signs.

According to the third embodiment, the fuel vapor in the fuel tank 3 can be supplied to the start-up combustor 49 stably by use of the fuel vapor pump 69 regardless of conditions of inner pressures of both the fuel tank 3 and the start-up combustor 49. Effective utilization of the fuel vapor, shortening of the start-up time of the fuel cell system and less consumption of the liquid fuel 5 can be achieved stably by supplying the fuel vapor stably to the start-up combustor 49.

### [Fourth Embodiment]

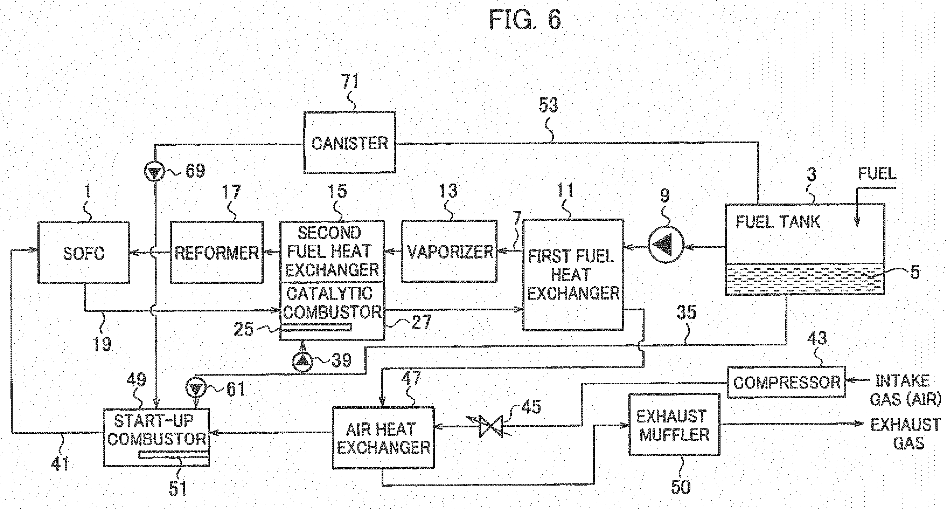

Fig. 6 is a configurational overall view of a fuel cell system according to a fourth embodiment of the present invention. In comparison with the third embodiment shown in Fig. 5, a canister 71 is provided on an upstream side of the fuel vapor pump 69, i.e. between the fuel tank 3 and the fuel vapor pump 69, on the fuel vapor pipe 53 in the fourth embodiment.

The canister 71 is made by filling activated carbon in a case, and constitutes a fuel storage that absorbs the fuel vapor and then desorbs the absorbed fuel vapor. Other configurations are equivalent to those in the third embodiment, and equivalent components to those in the third embodiment are labeled with identical reference signs.

The canister 71 absorbs, in the fuel vapor pipe 53, the fuel vapor that arises in the fuel tank 3. Air is introduced into the canister 71 through its atmosphere inlet port that is not shown in the drawings at the start-up of the fuel cell system by operating the fuel vapor pump 69. The absorbed fuel vapor is desorbed while the introduced air flows around the activated carbon (air purge).

According to the fourth embodiment, concentration of the fuel vapor to be used in the start-up combustor 49 can be increased by desorbing the fuel vapor absorbed in the canister 71 and then supplying it to the start-up combustor 49. Consumption of the liquid fuel can be reduced as much as an amount corresponding to the increased concentration of the fuel vapor, and thereby an effect of less consumption of the liquid fuel can be improved further and the start-up time of the fuel cell system can be also shortened.

### [Fifth Embodiment]

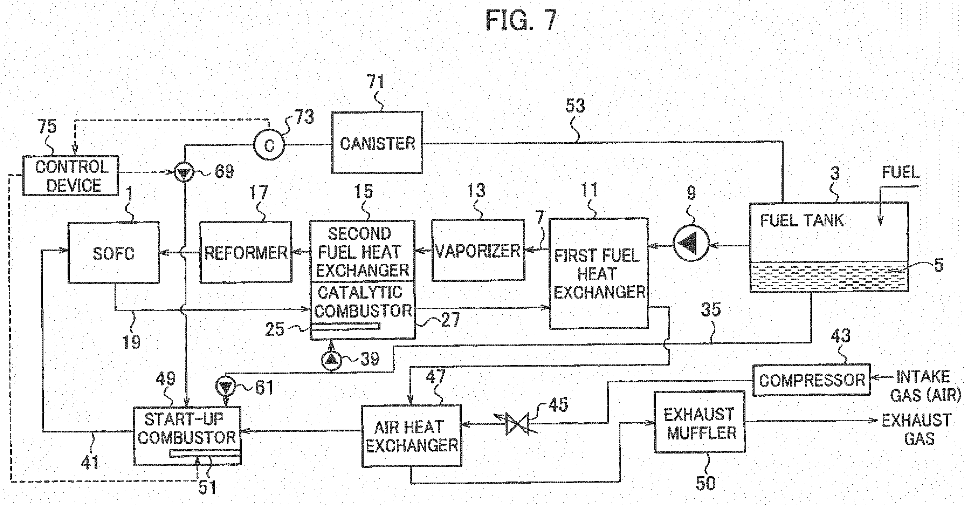

Fig. 7 is a configurational overall view of a fuel cell system according to a fifth embodiment of the present invention. In comparison with the fourth embodiment shown in Fig. 6, a concentration detector 73 that detects concentration of the fuel vapor and a control device that controls an amount of the fuel vapor supplied to the start-up combustor 49 are provided in the fifth embodiment.

The concentration detector 73 is disposed between the fuel vapor pump 69 and the canister 71 on the fuel vapor pipe 53, and detects concentration of the fuel vapor in the fuel vapor pipe 53. The control device 75 retrieves a concentration signal of the fuel vapor that is detected by the concentration detector 73, and then controls operations of the fuel vapor pump 69 and the electric heater 51 of the start-up combustor 49 according to the concentration of the fuel vapor.

In this case, the control device 75 and the fuel vapor pump 69 constitute a fuel vapor amount controller that controls an amount of the fuel vapor supplied to the start-up combustor 49. The fuel vapor amount controller controls an amount of the fuel vapor flowing through a downstream side of the fuel vapor pipe 53 from the concentration detector 73 according to the concentration of the fuel vapor that is detected by the concentration detector 73. Other configurations are equivalent to those in the fourth embodiment shown in Fig. 6, and equivalent components to those in the fourth embodiment are labeled with identical reference signs.

In the fifth embodiment, the control device 75 calculates a supplied amount of the fuel vapor according to the concentration of the fuel vapor by detecting the concentration of the fuel vapor by use of the concentration detector 73, When the concentration of the fuel vapor is high, the control device 75 increases a drive power of the fuel vapor pump 69 to carry out a control for sending a large amount of the fuel vapor into the start-up combustor 49 according to the high concentration of the fuel vapor. On the contrary, when the concentration of the fuel vapor is low, the control device 75 decreases a drive power of the fuel vapor pump 69 to carry out a control for sending a small amount of the fuel vapor into the start-up combustor 49 according to the low concentration of the fuel vapor.

On the premise that temperature of the air is also increased equivalently, when the concentration of the fuel vapor is high, a supplied amount of the liquid fuel can be reduced as much as an amount corresponding to the high concentration of the fuel vapor. When the concentration of the fuel vapor that is easier to be ignited than the liquid fuel is high, the control device 75 carries out a control so as to decrease electricity consumption of the electric heater 51. On the contrary, when the concentration of the fuel vapor is low, a supplied amount of the liquid fuel should be increased as much as an amount corresponding to the low concentration of the fuel vapor. When the concentration of the fuel vapor is low, the control device 75 carries out a control so as to increase electricity consumption of the electric heater 51.

As explained above, according to the fifth embodiment, the fuel vapor pump 69 and the electric heater 51 are controlled optimally according to the concentration of the fuel vapor to be operated efficiently, and thereby they can contribute to less consumption of the liquid fuel and reduction of the start-up time.

Note that, in the fifth embodiment, a configuration that includes the control device 75 and the fuel vapor pump 69 as the fuel vapor amount controller is adopted. The fuel vapor amount controller may be configured of the control device 75 and the flow-rate regulator 67 in the second embodiment shown in Fig. 4 by adopting a configuration in which the control device 75 controls an opening of the flow-rate regulation valve 67 according to the concentration detected by the concentration detector 73.

### [Sixth Embodiment]

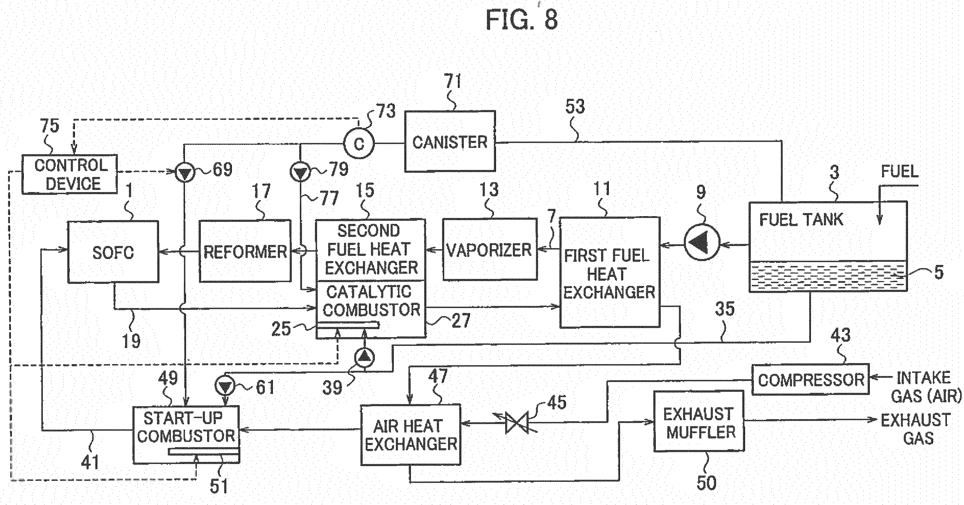

In a sixth embodiment of the present invention, the fuel vapor pump 69 used in the embodiments shown in the above-described Fig. 5 to Fig. 7 and an after-described Fig. 8 has a function to reduce pressure in the fuel vapor pipe 53. Other configurations are equivalent to those in the embodiments shown in Fig. 5 to Fig. 8.

The liquid fuel 5 in the fuel tank 3 vapors readily when the fuel vapor pump 69 reduces the pressure in the fuel vapor pipe 53 to increase an amount of the fuel vapor, and thereby the concentration of the fuel vapor can be increased. An amount of the liquid fuel used for the combustion can be can be reduced as much as an amount corresponding to the increased amount of the fuel vapor that is easier to be ignited than the liquid fuel, and thereby electricity consumption of the electric heater 51 can be reduced.

### [Seventh Embodiment]

Fig. 8 is a configurational overall view of a fuel cell system according to a seventh embodiment of the present invention. In comparison with the fifth embodiment shown in Fig. 7, a configuration in which the fuel vapor in the fuel vapor pipe 53 is supplied also to the catalytic combustor 27 as the fuel heater is adopted in the seventh embodiment. Namely, the fuel vapor pipe 53 flows the fuel vapor generated when the liquid fuel 5 in the fuel tank 3 vapors to the catalytic combustor 27.

The fuel vapor pipe 53 between the fuel vapor pump 69 and the concentration detector 73 is connected with the catalytic combustor 27 by a fuel vapor pipe 77, and a fuel vapor pump 79 is provided on the fuel vapor pipe 77. The control device 75 controls operations of the electric heater 25 of the catalytic combustor 27.

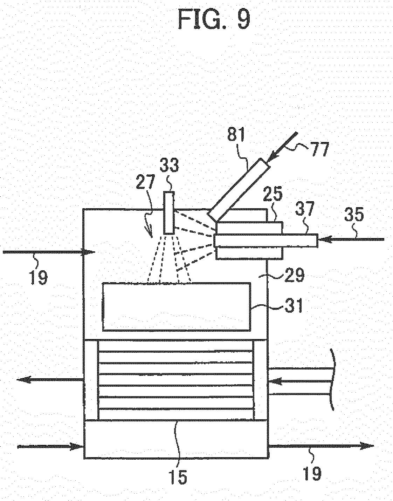

Fig.9 corresponds to a drawing made by omitting the vaporizer 13 from Fig. 2, and simply shows configuration of the catalytic combustor 27 together with the second fuel heat exchanger 15. In comparison with Fig. 2, a fuel vapor nozzle 81 connected to the fuel vapor pipe 77 is included in Fig. 9. The fuel vapor nozzle 81 injects the fuel vapor toward a portion, in the catalytic combustion chamber 29, to which the nozzle 37 injects the liquid fuel and toward a vicinity of the portion. Other configurations are equivalent to those in the fifth embodiment, and equivalent components to those in the fifth embodiment are labeled with identical reference signs.

The catalytic combustor 27 in the seventh embodiment carries out its combustion while the liquid fuel is supplied from the nozzle 37 and the fuel vapor is supplied from the fuel vapor nozzle 81. Namely, at the start-up of the fuel cell system, the fuel vapor is utilized not only for increasing temperature of the air, but also for getting vaporization heats for the liquid fuel required for reforming the fuel in the reformer 17.

Therefore, effective utilization of the fuel vapor at an entire of the fuel cell system including its fuel side in addition to its air side and shortening of the start-up time of the fuel cell system can be achieved, and less consumption of the liquid fuel 5 can be also achieved at an entire of the fuel cell system.

### [Eighth Embodiment]

In an eighth embodiment of the present invention, a utilizing timing of the fuel vapor in the fuel tank 3 is enhanced also to a steady operation, a stop process operation and an idle waiting operation in addition to the start-up operation. During these operations, the fuel vapor in the fuel tank 3 is supplied to at least one of the start-up combustor 49 and the catalytic combustor 27.

The start-up combustor 49 and the catalytic combustor 27 need temperature increases of the air to be supplied to the fuel cell 1 and the fuel to be reformed not only at the start-up of the duel cell system but also at its steady operation and so on. In these cases, the exhaust gas from the fuel cell 1 may be utilized as a heat source for increasing temperatures of the air and the fuel, but quantity of heats of the exhaust gas is sometimes short and temperature or flow-rate of the exhaust gas sometimes fluctuates according to an operated condition of the fuel cell 1.

Although a stable heat source can be got by combusting the fuels at such operations, consumption of the liquid fuel can be made less by utilizing the fuel vapor in the fuel tank 3 than by using only the liquid fuel is used as a heat source.

The embodiments of the present invention are described above, but these embodiments are mere examples described to make the present invention easily understood, and the present invention is not limited to the above embodiments. The technical scope of the present invention is not limited to specific technical matters disclosed in the above embodiments, and includes modifications, changes, alternative techniques easily derived from them.

With respect to the above first to eighth embodiments, plural embodiments can be combined with each other. For example, a configuration in which both the flow-rate regulating valve 67 in the second embodiments shown in Fig. 4 and the fuel vapor pump 69 in the third embodiment shown in Fig. 5 are included may be adopted. In addition, a configuration in which both the flow-rate regulating valve 67 in the second embodiments shown in Fig. 4 and the canister 71 in the fourth embodiment shown in Fig. 6 are included may be adopted. Further, a configuration in which three components, the flow-rate regulating valve 67, the fuel vapor pump 69 and the canister 71 are included may be adopted.

### INDUSTRIAL APPLICABILITY

The present invention is applied to a fuel cell system that supplies fuel and oxidizing agent to a fuel cell to generate electricity.

### REFERENCE SIGNS LIST

- 1: solid oxide fuel cell (fuel cell)
- 3: fuel tank (fuel container)
- 17: reformer
- 27: catalytic combustor (fuel heater)
- 49: start-up combustor (oxidizing agent heater)
- 53, 77: fuel vapor pipe
- 67: flow-rate regulating valve (flow-rate regulator)
- 69: fuel vapor pump (fuel vapor feeder, fuel vapor amount controller)
- 71: canister (fuel storage)
- 73: concentration detector
- 75: control device (fuel vapor controller)

## Claims

1. A fuel cell system comprising:
a fuel cell that generates electricity while fuel and oxidizing agent are supplied thereto;
a fuel container that contains the fuel to be supplied to the fuel cell in a liquid state;
an oxidizing agent heater that heats the oxidizing agent being supplied to the fuel cell; and
a fuel vapor pipe that connects the fuel container with the oxidizing agent heater and flows fuel vapor generated when liquid fuel in the fuel container vapors to the oxidizing agent heater.

2. The fuel cell system according to claim 1, wherein
the oxidizing agent heater operates at a start-up of the fuel cell system.

3. A fuel cell system comprising:
a fuel cell that generates electricity while fuel and oxidizing agent are supplied thereto;
a fuel container that contains the fuel to be supplied to the fuel cell in a liquid state;
a fuel heater that heats the fuel being supplied from the fuel container to the fuel cell;
a reformer that reforms the fuel heated by the fuel heater to generate hydrogen to be supplied to the fuel cell; and
a fuel vapor pipe that connects the fuel container with the fuel heater and flows fuel vapor generated when liquid fuel in the fuel container vapors to the fuel heater.

4. The fuel cell system according to any one of claims 1 to 3, wherein
a flow-rate regulator that regulates flow-rate of the fuel vapor in the fuel vapor pipe is provided on the fuel vapor pipe.

5. The fuel cell system according to any one of claims 1 to 4, wherein
a fuel vapor feeder that feeds the fuel vapor in the fuel vapor pipe is provided on the fuel vapor pipe.

6. The fuel cell system according to any one of claims 1 to 5, wherein
a fuel storage that absorbs the fuel vapor in the fuel vapor pipe and desorbs the fuel vapor absorbed is provided on the fuel vapor pipe.

7. The fuel cell system according to any one of claims 1 to 6, further comprising:
a concentration detector that detects concentration of the fuel vapor in the fuel vapor pipe; and
a fuel vapor amount controller that controls an amount of the fuel vapor flowing through a downstream side of the fuel vapor pipe from the concentration detector according to the concentration of the fuel vapor that is detected by the concentration detector.

8. The fuel cell system according to claim 5, wherein
the fuel vapor feeder has a function to reduce pressure in the fuel vapor pipe.
